# EUROPÄISCHE PATENTSCHRIFT

(11) **EP 1 224 754 B1**
(45) Veröffentlichungstag und Bekanntmachung des Hinweises auf die Patenterteilung: **23.07.2003**
(21) Anmeldenummer: 00983003.5
(22) Anmeldetag: 13.10.2000
(51) Int. Cl.: H04B 10/08

(54) **VERFAHREN UND EINRICHTUNG ZUR KONTINUIERLICHEN ÜBERWACHUNG EINER OPTISCHEN ÜBERTRAGUNGSSTRECKE**
METHOD AND DEVICE FOR CONTINUOUSLY MONITORING AN OPTICAL TRANSMISSION PATH
PROCEDE ET DISPOSITIF DESTINES A LA SURVEILLANCE CONTINUE D'UNE LIAISON DE TRANSMISSION OPTIQUE

(30) Priorität: 13.10.1999 DE 19949401
(43) Veröffentlichungstag der Anmeldung: 24.07.2002
(73) Patentinhaber: Corning Incorporated, Corning, New York 14831 (US)
(72) Erfinder: DEUTSCH, Bernhard, 81477 München (DE)
(74) Vertreter: Viering, Jentschura & Partner
(86) Internationale Anmeldenummer: DE0003618
(87) Internationale Veröffentlichungsnummer: WO01028133

(56) Entgegenhaltungen:
- EP-A- 0 841 552
- DE-U- 29 819 353
- US-A- 5 790 285

## Beschreibung

Die Erfindung betrifft ein Verfahren und Einrichtung zur kontinuierlichen Überwachung einer optischen Übertragungsstrekke.

Der Datenverkehr auf optischen Übertragungsstrecken nimmt durch Erhöhen der Kanal-Bitbreiten im Zeitmultiplex und der Kanalzahlen im Wellenlängenmultiplex immer mehr zu. Aufgrund der erhöhten Belastung der Übertragungsstrecken machen sich Fehler in der Übertragungsstrecke in zunehmendem Maße bemerkbar und führen zu Übertragungsfehlern. Daher gibt es einen Bedarf an wirkungsvollen Verfahren und Vorrichtungen zur Überwachung der optischen Übertragungsstrecken.

Bei Problemen auf der Übertragungsstrecke werden die Übertragungsstrecken heutzutage meist kurz unterbrochen, um entsprechende Meßeinrichtungen ankoppeln zu können, mit denen dann ein Übertragungssignal in die Übertragungsstrecke eingekoppelt wird, um die Übertragungsstrecke zu testen. Es kann auch ein Signalanteil des übertragenen Signals ausgekoppelt werden, um die Übertragungsstrecke zu testen. Eine kontinuierliche oder zumindest unterbrechungsfreie Ankopplung ist hierbei nicht möglich.

Es gibt bereits ein Überwachungssystem der Firma CIENA Corp. unter dem Namen WaveWatcher®, welches eine kontinuierliche Überwachung eines optischen Netzwerkes ermöglicht. Es handelt sich dabei um ein verhältnismäßig aufwendiges System mit einem Netzwerkelementmanager, einem optischen Servicekanal und einem Elementmanagementsystem, das in ein optisches Netzwerk eingebettet wird. Das System überwacht, misst und speichert den Status und die Betriebsweise jedes Moduls im System. Es wird ein Standarddatenkommunikationsnetzwerk verwendet, welches von dem optischen Servicekanal unterstützt wird, um Managementinformationen über das System zu verarbeiten. Das Datenkommunikationsnetzwerk ermöglicht einen Fernzugriff und eine Fernsteuerung der Elemente des Netzwerkmanagements. Der Nachteil dieses Systems besteht darin, daß es verhältnismäßig aufwendig ist.

Ferner ist ein System zur Überwachung optischer Netzwerke von der Fa. Lucent Technologies bekannt, welches dazu dient, die Konfiguration, die Performance, die Sicherheit und andere Parameter eines optischen Netzwerkes auf der Ebene des Netzwerkmanagements zu überwachen. Mit diesem System wird insbesondere, wenn ein Fehler in dem Netzwerk auftritt, herausgefunden, welche Komponenten betroffen sind. Der Betreiber kann dann entscheiden, was mit diesen Komponenten geschehen soll, und er kann die Benutzer dieser Schaltungen informieren. Auch dieses System ist verhältnismäßig aufwendig.

Aus der US 5,790,285 ist ein Optikfaser-Überwachungssystem zum kontinuierlichen Überwachen des Zustands von Optikfasern bekannt, mit einer Mehrzahl von Individualmitteln zum Extrahieren optischer Energie aus einer Mehrzahl von Optikfasern, wobei jedes der Mittel dazu vorgesehen ist, optische Energie aus einer Faser der Mehrzahl der Fasern zu extrahieren, Mittel zum Zuführen der extrahierten Energie an ein Überwachungsmittel, das eine Überwachungsfaser aufweist, die sich von jeder der Individualmittel aus erstreckt und die ein Faserende in dem Überwachungsmittel hat, wobei das Überwachungsmittel Mittel zum Antworten auf das Vorhandensein der optischen Energie zum Erzeugen eines für das Level der optischen Energie indikativen Signals aufweist, Messmittel zum Empfangen des so erzeugten Signals zum Ermitteln, wenn das optische Signal einen Optikfaserfehler anzeigt, Lokalisierungsmittel unter Steuerung von den Messmitteln zum Erzeugen eines Fehlerlokalisierungssignals, und Mittel zum Aufbringen des Fehlerlokalisierungssignals auf die Optikfaser.

Aus der EP 0 841 552 A1 ist ein Messinstrument zum Messen reflektierter optischer Signale bekannt.

Der Erfindung liegt die Aufgabe zugrunde, eine kontinuierliche Überwachung einer optischen Übertragungsstrecke oder eines optischen Netzwerkes mit möglichst einfachen Mitteln bereitzustellen.

Dies wird mittels eines Verfahrens bzw. einer Einrichtung zur kontinuierlichen Überwachung einer optischen Überwachungsstrecke mit den Merkmalen im Anspruch 1 bzw. im Anspruch 7 erreicht. Bevorzugte Weiterbildungen der Erfindung sind in den jeweiligen abhängigen Ansprüchen beschrieben. Da für das Ein- beziehungsweise Auskoppeln des Probensignals keine Unterbrechung des übertragenen Signals erforderlich ist, kann durch die Erfindung in einfacher Weise eine kontinuierliche und unterbrechungsfreie Überwachung der optischen Übertragungsstrecke durchgeführt werden.

Eine vorteilhafte Ausgestaltung des erfindungsgemäßen Verfahrens ist dadurch gekennzeichnet, dass das Probensignal ein OTDR-Signal ist. OTDR (optical time domain reflectrometer = optischer Reflektometer in der Zeitdomäne) ist ein System, um die Güte von Übertragungsstrecken beziehungsweise Fehler in einer Übertragungsstrecke festzustellen, in dem die von der Übertragungsstrecke reflektierten Signale ausgemessen werden. Mit Hilfe der reflektierten Signale läßt sich im Fehlerfall eine Ortsauflösung erreichen, das heißt, über die Laufzeit des Probensignales von der Einkopplung zur Reflexionsstelle und zurück zur Auskopplung sowie über die Intensität des reflektierten Signals lassen sich Aussagen über den Ort und die Art des Fehlers machen.

Gemäß der Erfindung ist eine kontinuierliche und unterbrechungsfreie Überwachung der optischen Übertragungsstrecke erzielt, wobei insbesondere das übertragene Signal selbst, dass heißt, ein Bruchteil desselben, direkt zur Messung der Güte der Übertragungsstrecke verwendet wird.

Die Erfindung ist vorteilhaft, weil aus beiden Messgrößen, nämlich dem reflektierten Signal des Probensignals und dem ausgekoppelten Bruchteil des übertragenen Signals, Aussagen über die Güte der Übertragungsstrecke beziehungsweise Fehler in der Übertragungsstrecke, einen zunehmenden Abfall in der Übertragungsleistung oder einen drohenden Ausfall der Übertragungsstrecke gemacht werden können. Die Messung an dem übertragenen Signal gibt eine direkte Aussage der Wechselwirkung zwischen der Übertragungsstrecke und dem übertragenen Signal, während die Auswertung des Probensignales im Fehlerfall eine Ortsauflösung, das heißt eine Lokalisierung des Fehlers, ermöglicht.

Eine vorteilhafte Ausgestaltung des erfindungsgemäßen Verfahrens ist dadurch gekennzeichnet, dass das Überwachungssignal (S_{SUP}), das heißt der ausgekoppelte Bruchteil des übertragenen Signals (S_{IN}) vor der Messung gefiltert wird derart, dass nur im Übertragungsband des übertragenen Signals (S_{IN}) liegende Signale durchgelassen werden. Damit werden unerwünschte Signalanteile und im Falle eines Probensignales auch dessen Einbeziehung in die Messung des übertragenen Signals vermieden, so dass eine exakte Messung der Wechselwirkung der Übertragungsstrecke auf das übertragene Signal erfolgen kann. Außerdem wird die Sättigung oder Zerstörung/Beschädigung des Empfängers durch das OTDR-Signal vermieden, das bekanntlich eine hohe Ausgangsleistung hat.

Eine weitere vorteilhafte Ausgestaltung des erfindungsgemäßen Verfahrens ist dadurch gekennzeichnet, dass das Messergebnis nach einer Logik verarbeitet wird, und dass ein Alarm gegeben wird, wenn ein Fehler festgestellt wird. Hierdurch erfolgt eine für den Benutzer wertvolle Aufarbeitung des Messergebnisses, so dass der Benutzer entsprechend reagieren kann.

Eine weitere vorteilhafte Ausgestaltung des erfindungsgemäßen Verfahrens ist dadurch gekennzeichnet, dass die Intensität des ausgekoppelten Signals bei 1-10% der Intensität des übertragenen Signals liegt. Damit wird in vorteilhafter Weise die Gesamtleistung des übertragenen Signals, die bei Durchführung des erfindungsgemäßen Verfahrens weiter übertragen wird, nur unwesentlich vermindert.

Schließlich ist eine weitere vorteilhafte Ausgestaltung des erfindungsgemäßen Verfahrens dadurch gekennzeichnet, dass das Probensignal in die Übertragungsstrecke des ankommenden und/oder des abgehenden übertragenen Signals eingekoppelt wird. Die Überwachung der Übertragungsstrecke kann somit sowohl entgegen der Richtung des übertragenen Signals als auch in Richtung des übertragenen Signals durchgeführt werden. Wenn beide Überwachungsmöglichkeiten ausgeschöpft werden, ergibt sich eine Kostenersparnis daraus, dass die Module zur Durchführung des erfindungsgemäßen Verfahrens nur nach je zwei zu überwachenden Übertragungsstreckeneinheiten eingesetzt werden müssen.

Zur Verwirklichung eines Moduls zur Durchführung des erfindungsgemäßen Verfahrens ist lediglich ein Multiplexer und ein Koppler erforderlich, und die Übertragungsstrecke kann kontinuierlich und ohne Unterbrechung überwacht werden.

Eine vorteilhafte Ausgestaltung der erfindungsgemäßen Einrichtung ist dadurch gekennzeichnet, dass dem Koppler ein OTD-Reflektometer nachgeschaltet ist. Mit einer derartigen Einrichtung kann in vorteilhafter Weise aus dem reflektierten Probensignal auf den Ort einer Fehlstelle in der Übertragungsstrecke geschlossen werden.

Gemäß der Erfindung werden in vorteilhafter Weise nur eine Kopplungseinrichtung und eine Messeinrichtung benötigt, um die Messungen durchzuführen, die zur kontinuierlichen und unterbrechungsfreien Überwachung der Übertragungsstrecke erforderlich sind.

Ein großer Vorteil der erfindungsgemäßen Einrichtung liegt in der optimalen Kombination der Bauelemente WIC (Wavelength Independent Coupler) und WDM (Wavelength Division Multiplexer) in einem Modul, der die erforderliche Funktion zur Verfügung stellt. Der Modul muß lediglich in ein vorhandenes Übertragungssystem eingesetzt werden.

Eine vorteilhafte Ausgestaltung der erfindungsgemäßen Einrichtung ist dadurch gekennzeichnet, dass der Multiplexer ein WDM ist. Bei einem derartigen Multiplexer ist vorteilhaft, dass Signale beliebiger Frequenzen, das heißt, auch Signale mit Frequenzen außerhalb des Übertragungsbandes des übertragenen Signals können in die Übertragungsstrecke eingekoppelt werden.

Eine vorteilhafte Ausgestaltung der erfindungsgemäßen Einrichtung ist dadurch gekennzeichnet, dass die Messeinrichtung eine Photodetektor ist, der die Leistung des ausgekoppelten übertragenen Signals misst.

Eine vorteilhafte Ausgestaltung der erfindungsgemäßen Einrichtung ist dadurch gekennzeichnet, dass die Einrichtung zur Auswertung des gemessenen, ausgekoppelten übertragenen Signals eine Logikschaltung mit Alarmfunktion ist.

Eine weitere vorteilhafte Ausgestaltung der erfindungsgemäßen Einrichtung ist dadurch gekennzeichnet, dass die Kopplungseinrichtung ein sog. WIC ist, so dass das Modul auf einem weiten Frequenzbereich übertragener Signale einsetzbar ist.

Eine weitere vorteilhafte Ausgestaltung der erfindungsgemäßen Einrichtung ist dadurch gekennzeichnet, dass zwischen der Kopplungseinrichtung und der Messeinrichtung ein optischer Bandpassfilter vorgesehen ist, um Signalanteile auszufiltern, die in der Messeinrichtung nicht gemessen werden sollen, insbesondere, wenn ein Probensignal zusätzlich zu dem übertragenen Signal verwendet wird, soll das Probensignal ausgefiltert werden, um eine genaue Messung des übertragenen Signals zu ermöglichen. Außerdem wird die Sättigung oder Zerstörung bzw. Beschädigung des Empfängers durch das OTDR-Signal vermieden, das bekanntlich eine hohe Ausgangsleistung hat.

Eine weitere vorteilhafte Ausgestaltung der erfindungsgemäßen Einrichtung ist dadurch gekennzeichnet, dass zwei Wellenlängenmultiplexer vorgesehen sind, von denen der eine Wellenlängenmultiplexer zum Einkoppeln des Probensignales für den ankommenden Teil der Übertragungsstrecke und der andere Wellenlängenmultiplexer zum Einkoppeln des Probensignales (S_{OTDR,abg}) für den abgehenden Teil der Übertragungsstrecke vorgesehen ist. So können in vorteilhafter Weise beide Teile der Übertragungsstrecke durch einen Modul überwacht werden.

Eine weitere vorteilhafte Ausgestaltung der erfindungsgemäßen Einrichtung ist dadurch gekennzeichnet, dass der Multiplexer in Übertragungsrichtung vor dem Koppler angeordnet ist, wobei die Filterung des OTDR-Signals eingespart werden kann.

Schließlich ist eine weitere vorteilhafte Ausgestaltung der erfindungsgemäßen Einrichtung dadurch gekennzeichnet, dass die Einrichtungen, die ein Modul zur Überwachung optischer Übertragungsstrecken bilden, auf einer Leiterplatte beziehungsweise auf einem Einschub angeordnet sind. Auf diese Weise läßt sich der Modul in vorhandene Hardware ohne zusätzliche Mittel integrieren.

Ausführungsbeispiele der Erfindung werden nun anhand der beiliegenden Zeichnungen beschrieben. Es zeigen:
- Fig. 1: den prinzipiellen Aufbau eines Moduls zur Überwachung von optischen Übertragungsstrecken, wenn der ankommende Zweig einer Übertragungsstrecke überwacht werden soll;
- Fig. 2: den prinzipiellen Aufbau eines Moduls zur Überwachung von optischen Übertragungsstrecken, wenn der abgehende Zweig einer Übertragungsstrecke überwacht werden soll;
- Fig. 3: den prinzipiellen Aufbau eines Moduls wie in Fig. 1 mit der Ergänzung eines Photodetektors und einer Logikschaltung zur Erzeugung eines Alarmsignals;
- Fig. 4: den prinzipiellen Aufbau eines Moduls wie in Fig. 1 mit der Ergänzung eines Photodetektors und einer Logikschaltung zur Erzeugung eines Alarmsignals mit einem zusätzlichen optischen Filter;
- Fig. 5: den prinzipiellen Aufbau eines Moduls, wenn das OTDR-Signal sowohl in die ankommende als auch in die abgehende Übertragungsstrecke eingekoppelt wird;
- Fig. 6: den prinzipiellen Aufbau eines Moduls zur Überwachung von optischen Übertragungsstrecken als Alternative zu Fig. 1; und
- Fig. 7: einen Einschub mit einem Modul gemäß der Erfindung.

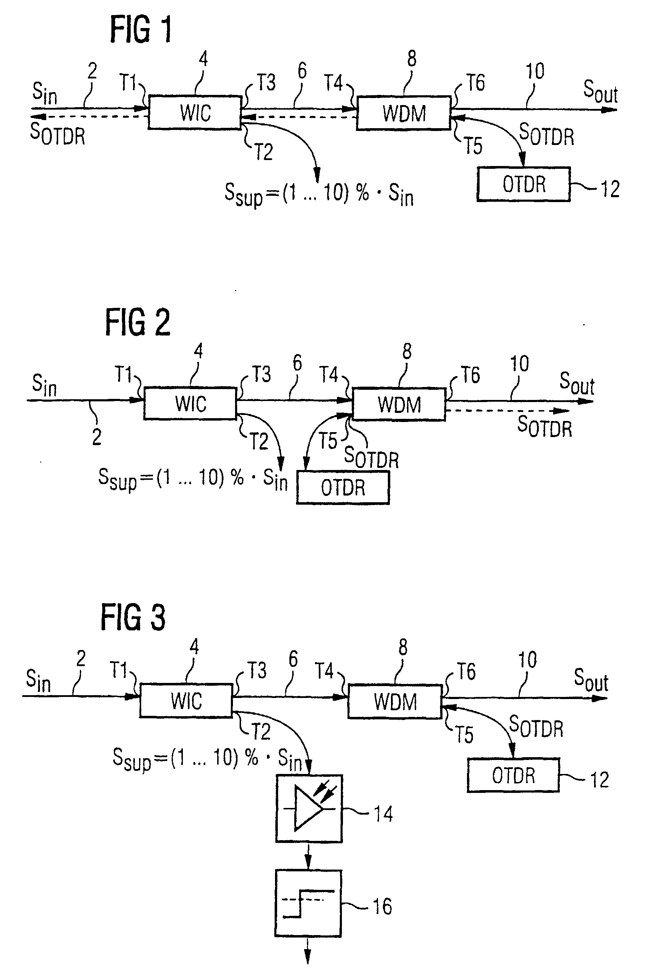

In Fig. 1 ist ein Modul zur Überwachung von optischen Übertragungsstrecken, insbesondere einer Übertragungsstrecke 2 für ein ankommendes Signal S_{IN}, gezeigt. Das ankommende Signal S_{IN} wird auf das Tor T1 eines wellenlängenunabhängigen Kopplers 4 gegeben (WIC = Wavelength Independent Coupler = wellenlängenunabhängiger Koppier), der an einem Tor T2 ein Bruchteil des ankommenden Signals S_{IN} auskoppelt, während der verbleibende Hauptanteil das ankommenden Signals S_{IN} am Tor T3 ausgekoppelt wird. Der Leistungsanteil des ankommenden Signals S_{IN,} der an dem Tor T2 ausgekoppelt wird, liegt im Bereich von 1 bis 10% des am Tor T1 eingekoppelten Signals S_{IN}. Der Hauptanteil des ankommenden Signals S_{IN} wird über eine Übertragungsstrecke 6 an einen Wellenlängenmultiplexer 8 abgegeben (WDM = Wavelength Division Multiplexer = Wellenlängenmultiplexer). An einem Tor T5 des Wellenlängenmultiplexers 8 wird ein OTDR-Signal S_{OTDR} in den Signalübertragungsweg eingekoppelt beziehungsweise aus diesem ausgekoppelt. An einem Tor T6 wird das Ausgangssignal Sₒᵤₜ aus dem Modul ausgekoppelt und über eine Übertragungsstrecke 10 abgegeben. Das Signal S_{OTDR} wird in einem OTD-Refraktometer 12 ausgewertet. Die Wellenlänge des Signals S_{OTDR} liegt außerhalb des Übertragungsbandes des übertragenen Signals. Wird im dritten optischen Fenster (bei etwa 1550 nm) das Signal übertragen, so kann das Signal S_{OTDR} bei 1310 nm oder oberhalb von 1600 nm (typischerweise bei 1625 nm liegen). Wird im zweiten optischen Fenster übertragen, so liegt das Signal S_{OTDR} im Wellenlängenbereich von 1550 nm oder auch bei 1625 nm.

Fig. 2 zeigt den prinzipiellen Aufbau eines Moduls zur Überwachung des abgehenden Zweiges der Übertragungsstrecke. In Fig. 2 werden für die gleichen Teile wie in Fig. 1 die gleichen Bezugszeichen verwendet. Durch Umkehr des Wellenlängenmultiplexers 8 wird erreicht, daß ein an dem Tor T5 eingekoppeltes Signals S_{OTDR} eine derartige Laufrichtung hat, dass der abgehende Zweig der Übertragungsstrecke beziehungsweise der Übertragungsstrecke 10 durch das Signal S_{OTDR} überwacht wird. Das Verhalten der Übertragungsstrecke 10 im Bezug auf das übertragene Signal Sₒᵤₜ wird dann in dem nächsten Überwachungsmodul in der Übertragungsstrecke überwacht, wo ebenfalls ein WIC vorgesehen ist, der dann einen Teil des übertragenen Signals auskoppelt, welches Rückschlüsse über die Übertragungscharakteristik der Übertragungsstrecke 10 zuläßt.

Fig. 3 zeigt den Modul von Fig. 1, wobei ein Photodetektor und eine Logikschaltung 16 ergänzt sind, der Photodetektor 14 empfängt den ausgekoppelten Bruchteil S_{SUP} des übertragenen Signals S_{IN} und gibt einen entsprechenden Messwert an die Logikschaltung 16 ab, die, beispielsweise über eine Schwellenwertbestimmung, die Güte der Übertragungsstrecke beziehungsweise einen Fehler in der Übertragungsstrecke feststellt und ein elektrisches Signal beziehungsweise ein Alarmsignal abgibt.

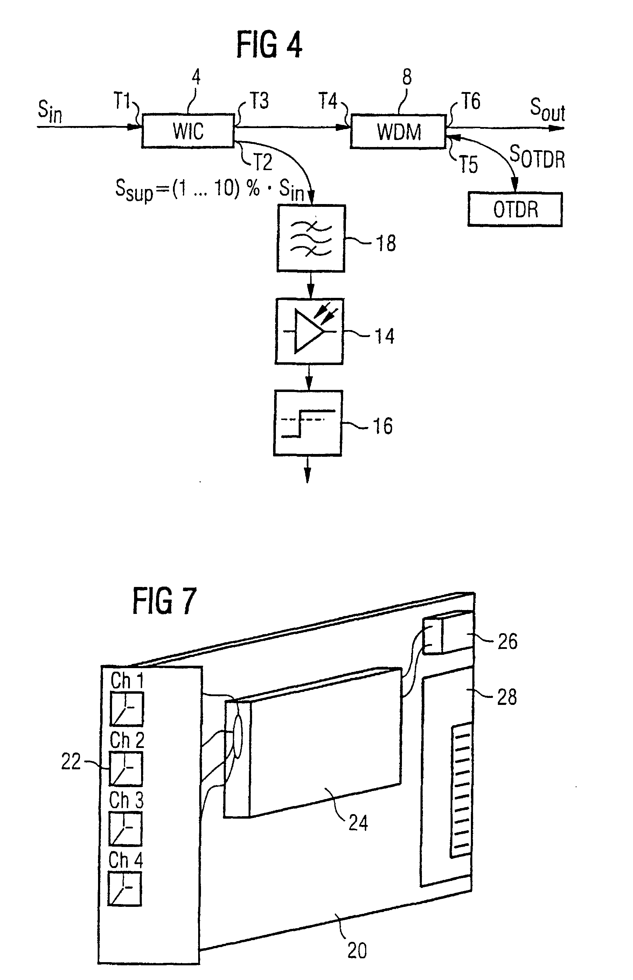

Fig. 4 ist eine weitere vorteilhafte Ausgestaltung des erfindungsgemäßen Moduls, wobei ein Bandpassfilter 18 vor dem Photodetektor 14 vorgesehen ist, damit das zurückgestreute Signal S_{OTDR} nicht auf den Photodetektor 14 fällt und dort die Messung verfälscht oder den Detektor übersättigt oder beschädigt.

Die Ausführungsformen nach den Figuren 3 und 4 gelten in gleicher Weise für die Ausführungsbeispiele der Figuren 1 und 2.

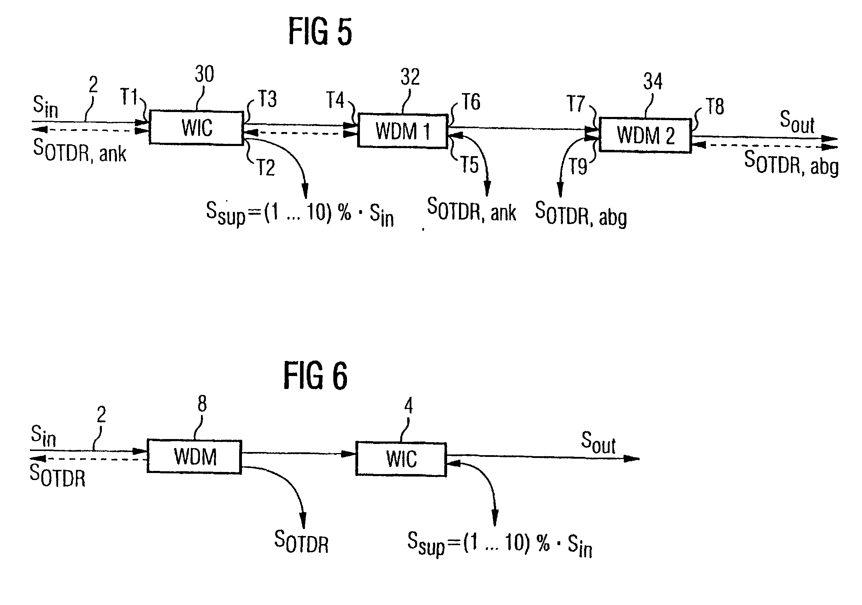

Fig. 5 zeigt im Prinzip einen Aufbau eines Moduls, wenn das OTDR-Signal in der ankommenden als auch in der abgehenden Übertragungsstrecke eingekoppelt wird. Dazu sind in der Übertragungsstrecke 2 ein wellenlängenunabhängiger Koppler 30, ein erster Wellenlängenmultiplexer 32 und ein zweiter Wellenlängenmultiplexer 34 vorgesehen. Wie bei den vorhergehenden Ausführungsbeispielen wird ein Teil des Signales S_{IN,} das an dem Tor T1 des Kopplers 30 ankommt, an dem Tor T2 des Kopplers 30 als Überwachungssignal S_{SUP} ausgekoppelt.

Das Übertragungssignal wird von dem Tor T3 des Kopplers 30 an das Tor T4 des ersten Wellenlängenmultiplexers 32 gegeben. Am Tor T5 des Wellenlängenmultiplexers 32 wird das Proben- oder OTDR-Signal S_{OTDR,ank} eingekoppelt, welches den ankommenden Teil der Überwachungsstrecke überwachen soll. An dem Tor T6 des Wellenlängenmultiplexers 32 wird das übertragene Signal ausgegeben und an dem Tor T7 in den zweiten Wellenlängenmultiplexer 34 eingegeben. Das übertragene Signal wird an dem Tor T8 des Wellenlängenmultiplexers 34 als Signal S_{OUT} ausgegeben. An dem Tor T9 wird ein Probensignal S_{OTDR,abg} eingekoppelt, welches den abgehenden Teil der Übertragungsstrecke überwachen soll. Der Koppler 30 und die Wellenlängenmultiplexer 32, 34 können wiederum in einem Modul zusammengefaßt werden.

Fig. 6 zeigt den prinzipiellen Aufbau eines Moduls zur Überwachung von optischen Übertragungsstrecken, wobei die gleichen Komponenten wie bei dem Ausführungsbeispiel von Fig. 1 verwendet werden. Abweichend von Fig. 1 ist hier jedoch der Wellenmultiplexer 8 in Übertragungsrichtung, die durch die Signale S_{IN} und S_{OS} dargestellt ist, vor dem Koppler 4 angeordnet. Das in dem Wellenlängenmultiplexer 8 eingekoppelte Probensignal S_{OTDR} dient zur Überwachung des ankommenden Teiles der Überwachungsstrecke. Dieses Ausführungsbeispiel der Erfindung hat den weiteren Vorteil, daß die Filterung des OTDR-Signals eingespart werden kann, weil dieses Signal vor dem Koppler 4 ausgekoppelt wird und damit nicht auf den Detektor gelangen kann.

Der Gesamtmodul kann aus diskreten Einzelbausteinen aufgebaut oder ein optisch integriertes Bauelement auf der Basis der SiO₂, Si- oder InP- Technologie sein. Die Gesamtdämpfung des Signals zwischen dem Tor T1 und dem Tor T6 ist kleiner als 3 dB.

Fig. 7 zeigt einen Einschub mit einer Leiterplatte 20, auf der der Überwachungsmodul 24, ein Paneel mit LWL-Kupplungen 22, insbesondere Kupplungen für die Kanäle Ch.1 bis Ch.4, einen Ausgang 26 für einen elektrischen Alarm oder eine Spannungsversorgung und eine Netzwerkschnittstelle 28 umfaßt. Die eine Netzwerkschnittstelle ist insofern vorteilhaft, als über diesen Einschub dann die Rechnerkapazität des Rechners genutzt werden kann, in dem der Einschub montiert ist, um die Auswertungen der in dem Überwachungsmodul gemessenen Signale durchzuführen (LWL = Lichtwellenleiter).

Obwohl in der vorhergehenden Beschreibung der Überwachungsmodul so beschrieben ist, dass er einen wellenlängenunabhängigen Koppler 4 beziehungsweise 30 in Kombination mit einem oder mehreren Wellenlängenmultiplexern 8 beziehungsweise 32, 34 ist zu beachten, dass Überwachungsfunktionen dieser beiden Bauteile separat voneinander genutzt werden können.

## Patentansprüche

1. Verfahren zur kontinuierlichen Überwachung einer optischen Übertragungsstrecke, wobei wellenlängenunabhängig ein Bruchteil eines übertragenen oder ankommenden Signals (S_{IN}) ohne Unterbrechung der Überwachungsstrecke ausgekoppelt wird; wobei ein Probensignal in die Überwachungsstrecke ohne Unterbrechung der Überwachungsstrecke eingekoppelt wird, wobei das von der Übertragungsstrecke reflektierte Probensignal ohne Unterbrechung der Überwachungsstrecke ausgekoppelt wird, wobei die Frequenz des Probensignals außerhalb des Übertragungsbandes des übertragenen Signals gewählt wird und wobei aufgrund einer Messung des ausgekoppelten Signal-Bruchteils (S_{SUP}) sowie des reflektierten Probensignals eine Aussage über die Güte der Übertragungsstrecke beziehungsweise einen Fehler in der Übertragungsstrecke gemacht wird.

2. Verfahren nach Anspruch 1, wobei das Probensignal. ein OTDR-Signal (S_{OTDR}) ist.

3. Verfahren nach Anspruch 1 oder 2, wobei das Überwachungssignal (S_{SUP}), das heißt der ausgekoppelte Bruchteil des übertragenen Signals (S_{IN}) vor der Messung gefiltert wird derart, dass nur im Übertragungsband des übertragenen Signals (S_{IN}) liegenden Signale durchgelassen werden.

4. Verfahren nach einem der Ansprüche 1 bis 3, wobei das Messergebnis nach einer Logik verarbeitet wird, und wobei ein Alarm gegeben wird, wenn ein Fehler festgestellt wird.

5. Verfahren nach einem der Ansprüche 1 bis 4, wobei die Leistung des ausgekoppelten Überwachungssignals (S_{SUP}) bei 1 bis 10% der Leistung des übertragenen Signals (S_{IN}) liegt.

6. Verfahren nach einem der vorhergehenden Ansprüche, wobei das Probensignal in die Übertragungsstrecke des ankommenden oder des abgehenden, übertragenen Signals eingekoppelt wird.

7. Einrichtung zur kontinuierlichen Überwachung einer optischen Übertragungsstrecke, mit einem Wellenlängen-Multiplexer (8), über den ein Probensignal (S_{OTDR}), dessen Frequenz außerhalb des Übertragungsbandes des übertragenen Signals liegt, in die Übertragungsstrecke ohne Unterbrechung derselben einzukoppeln beziehungsweise ein reflektiertes Signal aus der Übertragungsstrecke ohne Unterbrechung derselben auszukoppeln ist, einem Wellenlängen-Koppler (8), mit dem das reflektierte Signal aus der Übertragungsstrecke ohne Unterbrechung derselben ausgekoppelt wird, einer wellenlängenunabhängigen Kopplungseinrichtung (4), mit der ein Bruchteil eines übertragenen oder ankommenden Signals (S_{IN}) als Überwachungssignal (S_{SUP}) auszukoppeln ist, einer Messeinrichtung (14) zum Messen des ausgekoppelten Überwachungssignals (S_{SUP}) und jeweils einer dem Wellenlängen-Koppler (8) bzw. der Kopplungseinrichtung (4) zugeordneten Einrichtung (12, 16) zum Auswerten des gemessenen Überwachungssignals (S_{SUP}) und des reflektierten Signals unter Erstellen einer Aussage über die Güte der Übertragungsstrecke beziehungsweise über einen Fehler in der Übertragungsstrecke.

8. Einrichtung nach Anspruch 7, wobei dem Koppler (8) ein OTD-Reflektometer (12) nachgeschaltet ist.

9. Einrichtung nach Anspruch 7 oder 8, wobei die Messeinrichtung (14) ein Photodetektor ist.

10. Einrichtung nach einem der Ansprüche 7 bis 9, wobei die Einrichtung zur Auswertung des gemessenen, ausgekoppelten, übertragenen Überwachungssignals (S_{SUP}) eine Logikschaltung (16) mit Alarmfunktion ist.

11. Einrichtung nach einem der Ansprüche 7 bis 10, wobei zwischen der Kopplungseinrichtung (4) und der Messeinrichtung (14) ein Bandpassfilter (18) angeordnet ist.

12. Einrichtung nach einem der Ansprüche 7 bis 11, wobei zwei Wellenlängenmultiplexer (32), (34) vorgesehen sind, von denen der eine Wellenlängenmultiplexer (32) zum Einkoppeln des Probensignals (S_{OTDR,ank}) für den ankommenden Teil der Übertragungsstrecke und der andere Wellenlängenmultiplexer (34) zum Einkoppeln des Probensignals (S_{OTDR,abg}) für den abgehenden Teil der Übertragungsstrecke vorgesehen ist.

13. Einrichtung nach einem der Ansprüche 7 bis 12, wobei der Multiplexer (8) in Übertragungsrichtung vor dem Koppler (4) angeordnet ist.

14. Einrichtung nach einem der Ansprüche 7 bis 13, wobei die Einrichtung, die einen Modul zur Überwachung von optischen Übertragungsstrecken bildet, auf einer Leiterplatte beziehungsweise auf einem Einschub angeordnet ist.

## Claims

1. Method for continuously monitoring an optical transmission path, wherein a fraction of a transmitted or arriving signal (S_{IN}) is extracted independently of the wave length without interrupting the path to be monitored, wherein a test signal is introduced into the path to be monitored without interrupting the path to be monitored, wherein the test signal reflected by the transmission path is extracted without interrupting the path to be monitored, wherein the frequency of the test signal is chosen outside of the transmission band of the transmitted signal and wherein information on the quality of the transmission path or a defect in the transmission path is obtained based on a measurement of the extracted signal fraction (S_{SUP}) as well as the reflected test signal.

2. Method according to claim 1 wherein the test signal is an OTDR signal (S_{OTDR}).

3. Method according to claim 1 or 2 wherein the monitoring signal (S_{SUP}), i.e. the extracted fraction of the transmitted signal (S_{IN}) is filtered before the measurement in such a way that only signals that lie in the transmission band of the transmitted signal (S_{IN}) are allowed to pass.

4. Method according to one of the claims 1 to 3 wherein the measuring result is logically processed and wherein an alarm is triggered if a defect is detected.

5. Method according to one of the claims 1 to 4, wherein the power of the extracted monitoring signal (S_{SUP}) lies at 1 to 10% of the power of the transmitted signal (S_{IN}).

6. Method according to one of the preceding claims wherein the test signal is introduced into the transmission path of the transmitted signal as arriving or outgoing.

7. Device for continuously monitoring an optical transmission path with a wavelength-multiplexer (8) for introducing a test signal (S_{OTDR}), the frequency of which lies outside of the transmission band of the transmitted signal, into the transmission path without interrupting the path or for extracting a reflected signal from the transmission path without interrupting the path, respectively, with a wavelength-coupler (8) for extracting the reflected signal from the transmission path without interrupting the path, with a wavelength-independent coupling device (4) for extracting a fraction of a transmitted or arriving signal (S_{IN}) in the form of a monitoring signal (S_{SUP}), with a measurement device (14) for measuring the extracted monitoring signal (S_{SUP}) and with devices (12, 16) that are respectively assigned to the wavelength-coupler (8) and the coupling device (4) and serve for evaluating the measured monitoring signal (S_{SUP}) and the reflected signal such that information regarding the quality of the transmission path or a defect in the transmission path, respectively, is obtained.

8. Device according to claim 7, wherein an OTD-reflectometer (12) is arranged downstream from the coupler (8).

9. Device according to claim 7 or 8, wherein the measuring device (14) is a photodetector.

10. Device according to one of the claims 7 to 9 wherein the device for evaluating the measured, extracted monitoring signal (S_{SUP}) is a logic circuit (16) with alarm function.

11. Device according to one of the claims 7 to 10 wherein a band pass filter (18) is arranged between the coupling device (4) and the measurement device (14).

12. Device according to one of the claims 7 to 11 wherein two wavelength multiplexers (32), (34) are provided, with one wavelength multiplexer (32) being provided for introducing the test signal (S_{QTDR, ank}) for the incoming section of the transmission path, and with the other wavelength multiplexer (34) being provided for introducing the test signal (S_{QTDR, abg}) for the outgoing section of the transmission path.

13. Device according to one of the claims 7 to 12 wherein the multiplexer (8) is arranged before the coupler (4) as seen in the direction of transmission.

14. Device according to one of the claims 7 to 13 wherein the device that forms a module for monitoring optical transmission paths is arranged on a printed-circuit board or on a rack, respectively.

## Revendications

1. Procédé de surveillance continue d'une section de transmission optique, selon lequel une fraction d'un signal transmis ou arrivant (S_{IN}) est découplée sans interruption de la section de surveillance, indépendamment de la longueur d'onde, un signal échantillonnage est injecté dans la section de surveillance sans interruption de la section de surveillance, le signal échantillonnage réfléchi par la section de transmission est découplé sans interruption de la section de surveillance, la fréquence du signal d'échantillonnage est choisie à l'extérieur de la bande de transmission du signal transmis, et une indication concernant la qualité de la section de transmission ou un défaut dans la section de transmission est établi sur la base d'une mesure de la fraction découplée (S_{SUP}) du signal, ainsi que du signal d'échantillonnage réfléchi.

2. Procédé selon la revendication 1, selon lequel le signal d'échantillonnage est un signal OTDR (S_{OTDR}).

3. Procédé selon la revendication 1 ou 2, selon lequel le signal de surveillance (S_{SUP}), c'est-à-dire la fraction découplée du signal transmis (_{IN}) est filtré avant la mesure de sorte que seuls des signaux situés dans la bande de transmission du signal transmis (S_{IN}) sont transmis.

4. Procédé selon l'une des revendications 1 à 3, selon lequel le résultat de mesure est traité selon une logique et une alarme est délivrée lorsqu'un défaut est établi.

5. Procédé selon les revendications 1 à 4, selon lequel la puissance du signal de surveillance découplée (S_{SUP}) est comprise entre 1 et 10 % de la puissance du signal transmis (S_{IN}).

6. Procédé selon l'une des revendications précédentes, selon lequel le signal d'échantillonnage est injecté dans la section de transmission du signal transmis d'arrivée ou de départ.

7. Dispositif de surveillance continue d'une section optique de transmission, comportant un multiplexeur de longueurs d'onde (8), au moyen duquel un signal d'échantillonnage (S_{OTDR}), dont la fréquence se situe à l'extérieur de la bande de transmission du signal transmis, est injecté dans la section de transmission sans interruption cette section ou un signal réfléchi est découplé de la section de transmission sans interruption de cette dernière, un coupleur de longueurs d'onde (8), à l'aide duquel le signal réfléchi est découplé de la section de transmission sans interruption de cette dernière, un dispositif de couplage (4) indépendant de la longueur d'onde au moyen duquel une fraction d'un signal transmis ou arrivant (S_{IN}) est découplée en tant que signal de surveillance (S_{SUP}), un dispositif de mesure (14) servant à mesurer le signal de surveillance découplé (S_{SUP}) et respectivement un dispositif (12,16) associé au coupleur de longueurs d'onde (8) ou au dispositif de couplage (4) pour évaluer le signal de surveillance mesuré (S_{SUP}) et le signal réfléchi moyennant l'établissement d'une indication concernant la qualité de la section de transmission ou concernant un défaut dans la section de transmission.

8. Dispositif selon la revendication 7, dans lequel un réflectomètre OTD (12) est branché en aval du coupleur (8).

9. Dispositif selon la revendication 7 ou 8, dans lequel le dispositif de mesure (14) est un photodétecteur.

10. Dispositif selon l'une des revendications 7 à 9, dans lequel le dispositif pour évaluer le signal de surveillance mesuré découplé et transmis (S_{SUp}) est un circuit logique (16) ayant une fonction d'alarme.

11. Dispositif selon l'une des revendications 7 à 10, dans lequel un filtre passe-bande (18) est disposé entre le dispositif de couplage (4) et le dispositif de mesure (14).

12. Dispositif selon l'une des revendications 7 à 11, dans lequel sont prévus deux multiplexeurs de longueurs d'onde (32,34), parmi lesquels le multiplexeur de longueurs d'onde (32) est prévu pour l'injection du signal d'échantillonnage (S_{OTDR,ank}) pour la partie arrivante de la section de transmission et l'autre multiplexeur de longueurs d'onde (34) est prévu pour l'injection du signal d'échantillonnage (S_{OTDR,abg}) pour la partie de départ de la section de transmission.

13. Dispositif selon l'une des revendications 7 à 12, dans lequel le multiplexeur (8) est disposé en amont du coupleur (4) dans la direction de transmission.

14. Dispositif selon l'une des revendications 7 à 13, dans lequel le dispositif, qui forme un module pour le contrôle de sections optiques de transmission, est disposé sur une plaquette à circuits imprimés ou sur un tiroir.
